# EUROPÄISCHE PATENTANMELDUNG

(11) **EP 3 915 381 A1**
(43) Veröffentlichungstag der Anmeldung: **01.12.2021**
(21) Anmeldenummer: 20177441.1
(22) Anmeldetag: 29.05.2020
(51) Int. Cl.: A21C 15/02

(54) **ÜBERGABEVORRICHTUNG ZUR ÜBERGABE VON GEBACKENEN WAFFELRÖLLCHEN**

(71) Anmelder: Bühler Food Equipment GmbH, 2100 Leobendorf (AT)
(72) Erfinder: Riefenthaler, Philipp, 2000 Stockerau (AT); Ince, Umut, 1100 Wien (AT)
(74) Vertreter: Puchberger & Partner Patentanwälte

(57) **Zusammenfassung**

Anordnung und Verfahren mit einer Übergabevorrichtung (1) zur Übergabe von gebackenen Waffelröllchen (2) von einer Herstellungsmaschine (3) an eine Nachbearbeitungsmaschine (4) zur Nachbearbeitung der Waffelröllchen (2) im heißen, plastisch verformbaren Zustand, wobei die Übergabevorrichtung (1) eine Rutsche (5) zum Transport der heißen, plastisch verformbaren Waffelröllchen (2) von der Herstellungsmaschine (3) Richtung Nachbearbeitungsmaschine (4) aufweist, und wobei im Endbereich (6) der Rutsche (5) oder zwischen Rutsche (5) und Nachbearbeitungsmaschine (4) eine über einen Transportwalzenantrieb (7) drehbar angetriebene Transportwalze (8) zum Transport der heißen, plastisch verformbaren Waffelröllchen (2) mit einer einstellbaren oder eingestellten Geschwindigkeit angeordnet ist.

## Beschreibung

Die Erfindung betrifft eine Übergabevorrichtung, eine Anordnung, ein Verfahren und einen Nachrüstsatz gemäß den Merkmalen der unabhängigen Patentansprüche.

Gemäß Stand der Technik sind Anordnungen bekannt, bei denen aus einem zuckerhältigen oder zuckerersatzhältigen Waffelteig gebildete Waffelröllchen im heißen, plastisch verformbaren Zustand verformt und anschließend abgekühlt werden, um knusprig-spröde Waffelprodukte mit speziellen Formen zu bilden.

Hierzu werden in einem Schritt Waffelröllchen in einer Herstellungsmaschine, insbesondere in einer sogenannten Ringbackmaschine hergestellt. Beispielhafte Herstellungsmaschinen sind den Druckschriften EP0888063A1, EP3041358A1, EP1175150A1, EP0955811A1 oder AT517007A1 zu entnehmen.

In einem zweiten Schritt werden die in der Herstellungsmaschine hergestellten Waffelröllchen einer Nachbearbeitungsmaschine zugeführt. In dieser Nachbearbeitungsmaschine werden die Waffelröllchen im heißen, insbesondere backwarmen Zustand, plastisch verformt, gegebenenfalls zerteilt und gegebenenfalls abgekühlt und damit erhärtet. Beispiele für Nachbearbeitungsmaschinen können beispielsweise den Druckschriften AT511405A1 oder EP1781109A1 entnommen werden.

Die bei der Herstellung von Waffelröllchen verwendeten Waffelteige weisen einen verhältnismäßig hohen Zuckeranteil oder Zuckerersatzanteil auf. Der Teig wird bevorzugt bandförmig gebacken und im heißen Zustand zu Waffelröllchen verarbeitet. Solange der Teig heiß, insbesondere backwarm, ist, kann er plastisch verformt werden. Sobald der Teig jedoch abgekühlt und der Zuckeranteil kristallisiert, weist der Teig und damit das Waffelröllchen eine knusprig-spröde Konsistenz auf. Aus diesem Grund ist es von großer Wichtigkeit, die in der Herstellungsmaschine hergestellten Waffelröllchen mit ausreichend hoher Temperatur in die Nachbearbeitungsmaschine zu befördern.

Die Beförderung über Transportmittel wie beispielsweise Transportbänder hat den Nachteil, dass die Transportbänder beheizt werden müssten, da sie andererseits die Waffelröllchen beim Transport abkühlen. In der Praxis werden daher häufig Rutschen verwendet, um die Waffelröllchen rasch von der Herstellungsmaschine in die Nachbearbeitungsmaschine zu befördern.

Insbesondere bei Nachbearbeitungsmaschinen, die nicht kontinuierlich, sondern taktweise arbeiten, ist eine zeitliche Synchronisation der Übergabe an die Nachbearbeitungsmaschine von großer Wichtigkeit. Nun tritt in der Praxis das Problem auf, dass die Geschwindigkeit der Waffelröllchen auf der Rutsche variiert. Wird ein Waffelröllchen zu schnell an die Nachbearbeitungsmaschine übergeben, und ist diese noch nicht zur Aufnahme eines weiteren Waffelröllchens bereit, so kann dies den Herstellungsprozess beeinträchtigen.

Ein Anhalten, Bremsen oder Beschleunige des Waffelröllchens ist mit herkömmlichen Mitteln nicht möglich, da die Waffelröllchen im heißen, plastisch verformbaren Zustand an die Nachbearbeitungsmaschine übergeben werden müssen. Ein Anhalten, z.B. durch einen Stopper, würde das weiche Waffelröllchen verformen und somit ebenfalls den Herstellungsprozess beeinträchtigen.

Aufgabe der Erfindung ist es nun, die Nachteile des Standes der Technik zu überwinden und eine Übergabevorrichtung zu schaffen, die eine rasche aber dennoch zeitlich exakt synchronisierte Übergabe von heißen, plastisch verformbaren Waffelröllchen ermöglicht.

Die erfindungsgemäße Aufgabe wird insbesondere durch die Merkmalskombination der unabhängigen Patentansprüche gelöst.

Die Erfindung betrifft insbesondere eine Übergabevorrichtung zur Übergabe von gebackenen Waffelröllchen von einer Herstellungsmaschine an eine Nachbearbeitungsmaschine zur Nachbearbeitung der Waffelröllchen im heißen, plastisch verformbaren Zustand, wobei die Übergabevorrichtung eine Rutsche zum Transport der heißen, plastisch verformbaren Waffelröllchen von der Herstellungsmaschine Richtung Nachbearbeitungsmaschine aufweist.

Erfindungsgemäß ist vorgesehen, dass im Endbereich der Rutsche oder zwischen Rutsche und Nachbearbeitungsmaschine eine über einen Transportwalzenantrieb drehbar angetriebene Transportwalze zum Transport der heißen, plastisch verformbaren Waffelröllchen mit einer einstellbaren oder eingestellten Geschwindigkeit angeordnet ist.

Gegebenenfalls ist vorgesehen, dass ein Förderspalt zur Förderung der Waffelröllchen vorgesehen ist, dass die Transportwalze den Förderspalt auf einer Seite begrenzt oder bildet und/oder dass eine Gegenhalterfläche vorgesehen ist, die den Förderspalt auf der gegenüberliegenden Seite begrenzt oder bildet, wobei die Gegenhalterfläche insbesondere durch einen Abschnitt der Rutsche gebildet ist.

Gegebenenfalls ist vorgesehen, dass der Förderspalt derart bemessen ist, dass ein von der Rutsche kommendes Waffelröllchen zwischen Transportwalze und Gegenhalterfläche eingezogen und weitertransportiert wird.

Gegebenenfalls ist vorgesehen, dass die Transportwalze zum Transport der heißen, plastisch verformbaren Waffelröllchen elastisch verformbar und insbesondere nachgiebig ausgebildet ist.

Gegebenenfalls ist vorgesehen, dass die Transportwalze derart ausgestaltet ist, dass sie beim Transport der Waffelröllchen elastisch verformt wird, aber die heißen, plastisch verformbaren Waffelröllchen im Wesentlichen nicht verformt.

Gegebenenfalls ist vorgesehen, dass die Mantelfläche der Transportwalze aus einem elastisch verformbaren und flüssigkeitsdichten Material, insbesondere aus einem Elastomer, bevorzugt aus Polyurethan, gebildet ist.

Gegebenenfalls ist vorgesehen, dass die Transportwalze radförmig ausgebildet ist und Speichen aufweist, die sich von einer Nabe der Transportwalze Richtung Mantelfläche der Transportwalze erstrecken, wobei die Speichen derart ausgebildet sind, dass sie sich beim Transport der heißen, plastisch verformbaren Waffelröllchen elastisch verformen.

Gegebenenfalls vorgesehen, dass die Transportwalze als Rundbürste ausgebildet ist. In diesem Fall wirken die Borsten der Rundbürste als Speichen und die Mantelfläche ist durch die Borstenenden gebildet.

Gegebenenfalls ist vorgesehen, dass der Verlauf der Speichen von der radialen Richtung abweicht.

Gegebenenfalls ist vorgesehen, dass die Speichen schräg zur radialen Richtung und gekrümmt verlaufen.

Gegebenenfalls ist vorgesehen, dass die Rutsche beidseitig verlaufende Führungsflächen zur seitlichen Führung der Waffelröllchen aufweist, wobei die Führungsflächen insbesondere durch langegestreckte Führungsstangen gebildet sind.

Gegebenenfalls ist vorgesehen, dass die Rutsche eine Stelleinrichtung zur Beeinflussung der Rutschgeschwindigkeit der Waffelröllchen aufweist, wobei die Stelleinrichtung insbesondere eine Stelleinrichtung zur Veränderung und Wahl des seitlichen Abstandes der Führungsflächen ist.

Gegebenenfalls ist vorgesehen, dass im Bereich der Förderwalze, insbesondere nach der Förderwalze, ein Sensor zur Detektion jeweils eines Waffelröllchens vorgesehen ist.

Gegebenenfalls betrifft die Erfindung eine Anordnung zur Herstellung von gebackenen, knusprig-spröden gerollten Waffelprodukten aus einem zuckerhältigen oder zuckerersatzhältigen Waffelteig, umfassend:
- eine Herstellungsmaschine zur Herstellung von heißen, plastisch verformbaren Waffelröllchen,
- eine Nachbearbeitungsmaschine zur Nachbearbeitung der Waffelröllchen im heißen, plastisch verformbaren Zustand und gegebenenfalls zur Abkühlung und Verfestigung der verformten Waffelröllchen,
- eine erfindungsgemäße Übergabevorrichtung zur Übergabe der Waffelröllchen von der Herstellungsmaschine an die Nachbearbeitungsmaschine im heißen, plastisch verformbaren Zustand,
- und eine Datenverarbeitungseinrichtung zur Verarbeitung von elektrischen Signalen und zur Steuerung von Komponenten der Anordnung.

Gegebenenfalls ist vorgesehen, dass die Nachbearbeitungsmaschine wahlweise eine Aufnahmestellung oder eine Verarbeitungsstellung aufweist, wobei in der Aufnahmestellung ein Waffelröllchen in die Nachbearbeitungsmaschine eingebracht werden kann.

Gegebenenfalls ist vorgesehen, dass in der Verarbeitungsstellung die Aufnahme eines weiteren Waffelröllchens gesperrt ist.

Gegebenenfalls ist vorgesehen, dass die Übergabevorrichtung und insbesondere deren Transportwalzenantrieb über die Datenverarbeitungseinrichtung derart mit der Nachbearbeitungsmaschine synchronisiert ist, dass die Waffelröllchen nur dann in die Nachbearbeitungsmaschine eingebracht werden, wenn sie sich in der Aufnahmestellung befindet.

Gegebenenfalls ist vorgesehen, dass die Herstellungsmaschine als Ringbackmaschine zur Herstellung von essbaren Waffelröllchen ausgebildet ist, dass die Ringbackmaschine zum Herstellen der Waffelröllchen mit einer kontinuierlich umlaufenden, beheizten Backfläche zum Backen von einem endlosen, im heißen Zustand plastisch verformbaren, Waffelband aus flüssigem, zuckerhältigem oder zuckerersatzhältigem Waffelteig ausgestattet ist, und dass die Ringbackmaschine eine Verarbeitungsstation umfasst, in der für das gebackene Waffelband eine der Backfläche benachbarte Abnahmevorrichtung, eine dieser Abnahmevorrichtung nachgeordnete Wickelvorrichtung zum Erzeugen eines endlosen hülsenförmigen Hohlkörpers und eine der Wickelvorrichtung nachgeordnete Schneidvorrichtung zum Ablängen des hülsenförmigen Hohlkörpers in einzelne Waffelröllchen vorgesehen ist.

In allen Ausführungsformen kann vorgesehen sein, dass eine Vorrichtung zum Einbringen einer Füllung, insbesondere einer Cremefüllung, in die Waffelröllchen oder in den hülsenförmigen Hohlkörper vorgesehen ist. Diese Vorrichtung kann beispielsweise ein Teil der Wickelvorrichtung sein.

Gegebenenfalls betrifft die Erfindung ein Verfahren zur Herstellung von gebackenen, knusprig-spröden, gerollten Waffelprodukten aus einem zuckerhältigen oder zuckerersatzhältigen Waffelteig, umfassend folgende Schritte:
- Herstellen von heißen, plastisch verformbaren Waffelröllchen in einer Herstellungsmaschine,
- Übergeben der heißen, plastisch verformbaren Waffelröllchen an eine Nachbearbeitungsmaschine, in der die Waffelröllchen im heißen, plastisch verformbaren Zustand verformt, gegebenenfalls zerteilt und gegebenenfalls abgekühlt und damit verfestigt werden,
- wobei die Waffelröllchen zur Übergabe auf einer Rutsche einer Übergabevorrichtung von der Herstellungsmaschine Richtung Nachbearbeitungsmaschine rutschen.

In allen Ausführungsformen kann vorgesehen sein, dass die Waffelröllchen oder der hülsenförmige Hohlkörper mit einer Füllung, insbesondere einer Cremefüllung, gefüllt werden oder wird.

Erfindungsgemäß ist vorgesehen, dass die Waffelröllchen im Endbereich der Rutsche oder zwischen Rutsche und Nachbearbeitungsmaschine durch eine drehbar angetriebene Transportwalze mit einer einstellbaren oder eingestellten Geschwindigkeit in die Nachbearbeitungsmaschine befördert werden.

Gegebenenfalls ist vorgesehen, dass sich die Transportwalze beim Kontakt mit dem Waffelröllchen elastisch verformt und nachgibt, womit das heiße, plastisch verformbare Waffelröllchen von der Transportwalze Richtung Nachbearbeitungsmaschine befördert wird, ohne dass es durch die Transportwalze verformt wird.

Gegebenenfalls ist vorgesehen, dass die mit einer einstellbaren oder eingestellten Geschwindigkeit Richtung Nachbearbeitungsmaschine beförderten Waffelröllchen jeweils über einen Sensor, insbesondere über eine Lichtschranke, detektiert werden.

Gegebenenfalls ist vorgesehen, dass ein Sensorsignal zusammen mit einem Geschwindigkeitssignal oder Geschwindigkeitswert in der Datenverarbeitungseinrichtung verarbeitet wird, um die Nachbearbeitungsmaschine in die Aufnahmestellung zu bringen, bevor oder während das Waffelröllchen in die Nachbearbeitungsmaschine befördert wird.

Gegebenenfalls betrifft die Erfindung einen Nachrüstsatz zur Bildung einer erfindungsgemäßen Übergabevorrichtung und/oder zur Bildung einer erfindungsgemäßen Anordnung, umfassend:
- eine Transportwalze,
- einen Transportwalzenantrieb zum Antrieb der Transportwalze,
- und eine Befestigungsvorrichtung zur Befestigung der Transportwalze und des Transportwalzenantriebs im Endbereich der Rutsche der Übergabevorrichtung oder zwischen der Rutsche und der Nachbearbeitungsmaschine.

Der Transportwalzenantrieb kann eine Steuerungsschnittstelle zur Verbindung des Transportwalzenantriebs mit der Datenverarbeitungseinrichtung aufweisen. Alternativ kann der Transportwalzenantrieb in allen Ausführungsformen auch als Motor mit einer einstellbaren bzw. geregelten Drehzahl ausgebildet sein. Die Kenntnis der eingestellten Motordrehzahl ermöglicht die Einstellung der Steuerung der Nachbearbeitungsmaschine zur Synchronisierung der Eingabe der Waffelröllchen. Dies insbesondere unter Verwendung des Sensorsignals.

Als "heiß" wird in allen Ausführungsformen bevorzugt eine Temperatur verstanden, bei der das Waffelröllchen nach dem Backvorgang noch zäh und plastisch verformbar ist. Die Temperatur liegt insbesondere über der Kristallisationstemperatur des Zuckers bzw. über der Aushärtungstemperatur des Waffelröllchens und insbesondere des Zuckeranteils oder des Zuckerersatzanteils. Insbesondere entspricht die Temperatur der Temperatur eines backwarmen Waffelröllchens.

In allen Ausführungsformen können die Herstellungsmaschine und die Nachbearbeitungsmaschine entsprechend dem Stand der Technik ausgebildet sein.

Die Herstellungsmaschine ermöglicht bevorzugt die Herstellung von essbaren, knusprigen, spröden Waffelröllchen aus gebackenen, im warmen Zustand plastisch verformbaren, endlosen Waffelbändern, die jeweils über einen Dorn zu einem endlosen, hülsenförmigen Hohlkörper gewickelt werden, der in einzelne Waffelröllchen abgelängt wird, die beim Abkühlen auf Raumtemperatur eine knusprige, spröde Konsistenz annehmen. Mögliche Herstellungsmaschinen umfassen eine kontinuierlich um ihre Drehachse gedrehte, zylindrische Backfläche, auf der im warmen Zustand plastisch verformbare Waffelbänder gebacken werden, die in weiterer Folge durch eine Abnahme- und Wickelvorrichtung von der zylindrischen Backfläche abgenommen und aufgerollt werden. Das Aufrollen bzw. Aufwickeln des Waffelbands geschieht bevorzugt bei einer kontinuierlichen Fortbewegung des zu bildenden Röllchens zwischen einem drehbar angetriebenen Rolldorn und einer Andrückwalze der Wickelvorrichtung. Dadurch wird eine im Wesentlichen endlose Waffelrolle gebildet, die in vordefinierten Abständen zu Waffelröllchen abgelängt wird. Hierbei können auch Wickelvorrichtungen verwendet werden, mit denen beim Aufwickeln des Waffelbands eine Creme in das Innere der Waffelröllchen eingebracht wird.

Der verwendete Waffelteig ist bevorzugt hauptsächlich aus Mehl, Zucker bzw. Zuckerersatz und Wasser zubereiteten und wird insbesondere flüssig auf die Backfläche aufgetragen. Der Waffelteig enthält bezogen auf seinen Mehlanteil bevorzugt zwischen 25 Gewichtsprozent und 100 Gewichtsprozent Zucker. Gegebenenfalls beträgt der Zuckeranteil 15 % - 70 % der Trockenmasse des Waffelteiges. Ein Zuckerersatz ist beispielsweise Erythrit, Xylitol, Maltodextrin und/oder Polydextrose.

Die Nachbearbeitungsmaschine kann eine Vorrichtung zum Herstellen von polsterförmigen Hohlkörpern sein, die an entgegengesetzten Enden durch Quetschkanten begrenzt sind. Dabei kann gleichzeitig auch eine Zerteilung der Waffelröllchen erfolgen.

Bei einer möglichen Ausgestaltung einer Nachbearbeitungsmaschine passieren die Röhrchen einen Fallschacht und gelangen quer zu ihrer Längsrichtung in ein langgestrecktes Quetschwerk der Quetschvorrichtung, bei welchem die beweglichen Quetschbacken in Querrichtung zurückgezogen und die Quetschwerkzeuge geöffnet sind. Zum Zerteilen der Röhrchen werden die beweglichen Quetschbacken mit Hilfe der sie tragenden Schlitten in Querrichtung vorgeschoben und die Quetschwerkzeuge geschlossen. Dabei werden bevorzugt alle Quetschwerkzeuge eines Quetschwerks gleichzeitig geschlossen. Das in ein geöffnetes Quetschwerk eingebrachte Röhrchen wird in einem einzigen Arbeitsgang in mehrere, in Längsrichtung aufeinanderfolgende verformte, insbesondere polsterförmige, Hohlkörper zerteilt.

Bei einer weiteren möglichen Ausgestaltung einer Nachbearbeitungsmaschine kann vorgesehen sein, dass zumindest eine längs einer Kreisbahn umlaufende Quetschvorrichtung vorgesehen ist, die sich entlang der Kreisbahn von einer oberen Aufnahmeposition zu einer unteren Abgabeposition bewegt, wobei die Quetschvorrichtung in der oberen Aufnahmeposition ein Waffelröllchen aufnimmt und das Waffelröllchen auf dem Weg zur unteren Abgabeposition verformt und insbesondere in polsterförmige Hohlkörper zerteilt. Die verformten Waffelröllchen können in der unteren Abgabeposition aus der Quetschvorrichtung ausgegeben werden. Es kann vorgesehen sein, dass die Quetschvorrichtung als mechanisch betätigbare Zange ausgebildet ist, die ein dem Umfang des Drehgestells benachbartes Zangenmaul besitzt und durch eine mechanische Betätigungsvorrichtung betätigbar ist.

Bevorzugt werden bei einer möglichen Ausgestaltung einer Nachbearbeitungsmaschine die an den entgegengesetzten Enden der polsterförmigen Hohlkörper vorgesehenen Quetschkanten in der längs einer Kreisbahn umlaufenden, als mechanisch betätigbare Zange ausgebildeten Quetschvorrichtung erzeugt. Die Zange wird nach dem Passieren der oberen Aufnahmeposition und nach der Aufnahme eines Waffelröllchens zugeklappt. Beim Zuklappen der Zange wird das Waffelröllchen verformt. Es entstehen nebeneinander angeordnete, polsterförmige Hohlkörper, die an den Seitenrändern durch die Quetschkanten miteinander verbunden sind. Die zugeklappte Zange wird durch die Drehbewegung des liegend angeordneten Drehgestells entlang der Kreisbahn von der oberen Aufnahmeposition zur unteren Abgabeposition befördert. Während dieser Drehbewegung des Drehgestells hält die zugeklappte Zange das Waffelröllchen an den Quetschkanten fest. Dies ermöglicht lange Haltezeiten für die Ausbildung der Quetschkanten. Wenn die zugeklappte Zange die untere Abgabeposition erreicht, wird das Waffelröllchen an den Quetschkanten durch Zusammendrücken der Zange durchtrennt. Dadurch entstehen voneinander getrennte, polsterförmige Hohlkörper, die beim Aufklappen der Zange nach unten aus der Zange fallen. Anschließend wird die Zange durch die Drehbewegung des Drehgestells entlang der Kreisbahn zur oberen Aufnahmeposition befördert, in der das nächste Waffelröllchen von der aufgeklappten Zange aufgenommen wird.

Grundsätzlich kann die Übergabevorrichtung jedoch zur Übergabe von Waffelröllchen an jede geeignete Nachbearbeitungsmaschine verwendet werden.

Die Funktion einer möglichen Ausführungsform der Übergabevorrichtung, der Anordnung und eines Nachrüstsatzes kann wie folgt beschrieben werden:
In einem ersten Schritt werden in einer Herstellungsmaschine Waffelröllchen hergestellt. Die Waffelröllchen werden im heißen, plastisch verformbaren Zustand ausgegeben.

In weiterer Folge werden die Waffelröllchen durch eine Übergabevorrichtung an eine Nachbearbeitungsmaschine übergeben. Dabei rutschen die Waffelröllchen nacheinander auf einer Rutsche der Übergabevorrichtung Richtung Nachbearbeitungsmaschine. Gegebenenfalls können mehrere Rutschen vorgesehen sein, die zu einer oder zu mehreren Nachbearbeitungsmaschinen führen. Im Endbereich der Rutsche treten die Waffelröllchen mit einer Transportwalze in Kontakt.

Die Transportwalze bildet mit einer Gegenhalterfläche einen Förderspalt. Die Transportwalze ist durch einen Transportwalzenantrieb mit einer einstellbaren oder eingestellten Geschwindigkeit drehbar angetrieben. Um eine Verformung der heißen, plastisch verformbaren Waffelröllchen zu vermeiden, ist die Transportwalze elastisch verformbar und insbesondere nachgiebig ausgebildet. Wird das Waffelröllchen durch die Transportwalze in den Förderspalt eingezogen, so verformt sich die Transportwalze, wobei aber eine Verformung des Waffelröllchens weitestgehend vermieden wird. Insbesondere umfasst die Transportwalze Speichen, die sich von einer Nabe Richtung Mantelfläche der Transportwalze erstrecken. Die Mantelfläche und insbesondere auch die Speichen verformen sich, wenn die Transportwalze das Waffelröllchen fördert. Zudem wird das Waffelröllchen bevorzugt auch von einem Sensor detektiert. Das Signal dieses Sensors wird an eine Datenverarbeitungseinrichtung übermittelt. Bevorzugt ist in derselben Datenverarbeitungseinrichtung auch ein Signal oder ein Wert vorhanden, das bzw. der Rückschlüsse auf die Drehgeschwindigkeit der Transportwalze bzw. auf die Fördergeschwindigkeit des Waffelröllchens ermöglicht. Insbesondere kann aus diesen Signalen ein Steuerungssignal erzeugt werden, das die Nachbearbeitungsmaschine in die Aufnahmestellung versetzt, in der ein neues Waffelröllchen aufgenommen werden kann. In weiterer Folge wird das Waffelröllchen in der Nachbearbeitungsmaschine plastisch verformt. Gegebenenfalls wird das Waffelröllchen in der Nachbearbeitungsmaschine auch in mehrere Teile zerteilt. Bei der Bearbeitung in der Nachbearbeitungsmaschine oder nach der Bearbeitung kühlt der Teig des Waffelröllchens ab und erhält so eine knusprig-spröde Konsistenz.

Gegebenenfalls wird die Anordnung bzw. die Übergabevorrichtung dadurch gebildet, dass ein Nachrüstsatz an bestehenden Komponenten angebracht wird. In diesem Fall wird der Nachrüstsatz über eine Befestigungsvorrichtung im Endbereich der Rutsche der Übergabevorrichtung angebracht. Der Nachrüstsatz wird insbesondere derart montiert, dass ein geeigneter Förderspalt gebildet wird. Der Nachrüstsatz umfasst eine Befestigungsvorrichtung, eine Transportwalze und einen Transportwalzenantrieb. Bevorzugt umfasst der Nachrüstsatz auch eine Schnittstelle zur Verbindung des Transportwalzenantriebs mit der Datenverarbeitungseinrichtung. Über diese Schnittstelle kann eine Steuerung des Transportwalzenantriebs erfolgen. Insbesondere kann über diese Schnittstelle auch ein Signal erfasst werden, das Rückschlüsse über die Fördergeschwindigkeit der Waffelröllchen Aufschluss gibt. Gegebenenfalls umfasst der Nachrüstsatz neben der Transportwalze auch eine Komponente zur Bildung der Gegenhalterfläche.

In weiterer Folge wird die Erfindung anhand von exemplarischen Ausführungsformen und anhand von Figuren weiter beschrieben.
**Figur 1** zeigt eine schematische Seitenansicht einer Anordnung.
**Figur 2** zeigt eine schematische Detailansicht einer Übergabevorrichtung in einer Seitenansicht.
**Figur 3** zeigt die Detailansicht aus Figur 2 in einer Ansicht von oben.
**Figur 4** zeigt eine Detailansicht einer Übergabevorrichtung.

Wenn nicht anders angegeben, so entsprechen die Bezugszeichen folgenden Komponenten: Übergabevorrichtung 1, Waffelröllchen 2, Herstellungsmaschine 3, Nachbearbeitungsmaschine 4, Rutsche 5, Endbereich 6, Transportwalzenantrieb 7, Transportwalze 8, Förderspalt 9, Gegenhalterfläche 10, Mantelfläche 11, Speiche 12, Führungsfläche 13, Führungsstange 14, Sensor 15, Datenverarbeitungseinrichtung 16, Befestigungsvorrichtung 17, Nabe 18, Stelleinrichtung 19.

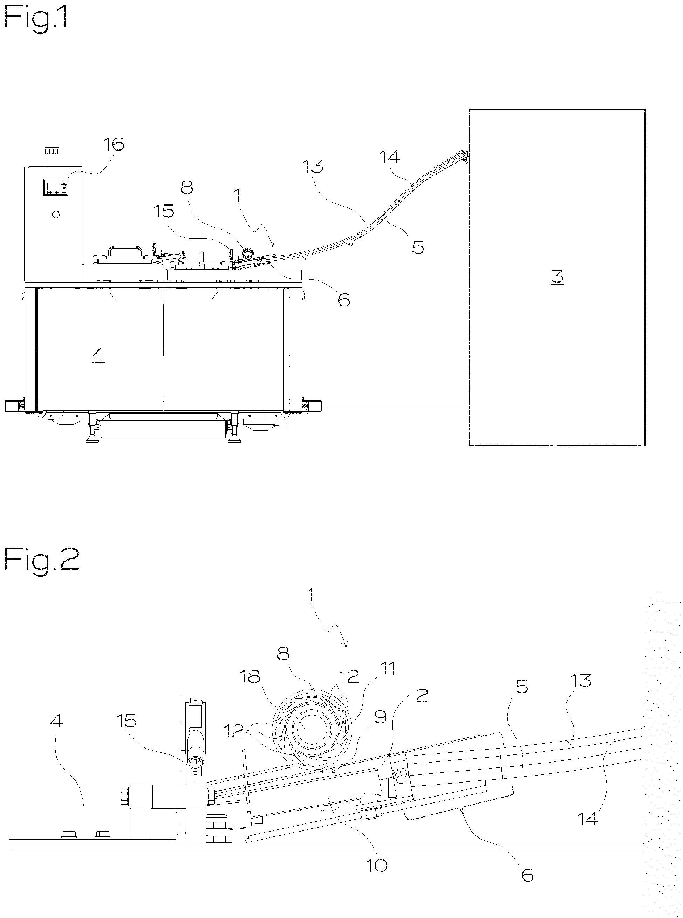

**Figur 1** zeigt eine Anlage, die eine Herstellungsmaschine 3, eine Nachbearbeitungsmaschine 4 und eine Übergabevorrichtung 1 umfasst. Die Herstellungsmaschine 3 und die Nachbearbeitungsmaschine 4 können gemäß Stand der Technik ausgebildet sein.

Die Herstellungsmaschine 3 ist eine Vorrichtung zur Herstellung von Waffelröllchen 2. Die Waffelröllchen 2 werden in der Regel kontinuierlich hergestellt, aber einzeln ausgegeben. Die Ausgabe erfolgt in einem bestimmten Takt, der von der Produktionsgeschwindigkeit der Herstellungsmaschine 3 abhängig ist. Die Waffelröllchen 2 werden aus der Herstellungsmaschine 3 ausgegeben und durch die Übergabevorrichtung 1 an eine Nachbearbeitungsmaschine 4 übergeben. Die Nachbearbeitungsmaschine 4 ist bevorzugt dazu eingerichtet, die heißen, plastisch verformbaren Waffelröllchen 2 zu bearbeiten. Insbesondere kann die Nachbearbeitungsmaschine 4 dazu eingerichtet sein, die Waffelröllchen 2 plastisch zu verformen und gegebenenfalls zu zerteilen. In weiterer Folge werden die Waffelröllchen 2 abgekühlt, womit sie sich verfestigen und die durch die Nachbearbeitungsmaschine 4 verliehene Form beibehalten wird. Das dadurch hergestellte Produkt weist eine knusprig-spröde Konsistenz auf.

Zur Übergabe der Waffelröllchen 2 von der Herstellungsmaschine 3 zur Nachbearbeitungsmaschine 4 erfolgt über eine Übergabevorrichtung 1. Die Übergabevorrichtung 1 umfasst eine Rutsche 5, über welche die Waffelröllchen 2, insbesondere angetrieben durch die Schwerkraft, selbsttätig Richtung Nachbearbeitungsmaschine 4 transportiert werden. Zur seitlichen Führung der Waffelröllchen 2 umfasst die Rutsche 5 Führungsflächen 13. Die Führungsflächen 13 erstrecken sich bevorzugt beidseitig entlang des Verlaufs der Rutsche 5. Hierdurch weist die Rutsche 5 beispielsweise ein wannenförmiges Profil auf. Die Rutsche 5 und gegebenenfalls auch die Führungsflächen 13 können, in der vorliegenden Ausführungsform, durch Führungsstangen 14 gebildet werden. Grundsätzlich sind aber auch andere Ausgestaltungen, wie beispielsweise eine Rutsche 5 mit einem Profil oder ein geeignetes Transportband denkbar.

Insbesondere bei Nachbearbeitungsmaschinen 4, die getaktet arbeiten, ist es wichtig, die Übergabe der Waffelröllchen 2 zeitlich steuern bzw. synchronisieren zu können. Hierzu ist im Endbereich 6 der Rutsche 5, bzw. zwischen der Rutsche 5 und der Nachbearbeitungsmaschine 4 eine Transportwalze 8 vorgesehen. Diese Transportwalze 8 ist über einen Transportwalzenantrieb 7 angetrieben oder antreibbar. Dadurch kann die Geschwindigkeit des Waffelröllchens 2 bei der Übergabe gewählt werden. Insbesondere weist das Waffelröllchen 2 durch die Zwangsführung und den Transport über die getriebene Transportwalze 8 eine bekannte Geschwindigkeit auf.

Die Nachbearbeitungsmaschine 4 arbeitet in der Regel getaktet und kann in eine Aufnahmestellung gebracht werden, in der Waffelröllchen 2 in die Nachbearbeitungsmaschine 4 eingebracht werden können. Zudem kann die Nachbearbeitungsmaschine 4 in eine Verarbeitungsstellung gebracht werden, in der keine Waffelröllchen 2 in die Nachbearbeitungsmaschine 4 eingebracht werden können bzw. sollen.

Beispielsweise umfasst die Nachbearbeitungsmaschine 4 einen Fallschacht, der in der Aufnahmestellung geöffnet ist und in der Verarbeitungsstellung geschlossen ist. Die Steuerung der Nachbearbeitungsmaschine 4 erfolgt über eine Datenverarbeitungseinrichtung 16 und geeignete Aktuatoren.

**Figur 2** zeigt ein Detail einer Übergabevorrichtung 1 und eines Teils der Nachbearbeitungsmaschine 4. Die Übergabevorrichtung 1 umfasst eine Transportwalze 8. Die Transportwalze 8 ist über einen Transportwalzenantrieb 7 drehbar angetrieben.

Die Steuerung des Transportwalzenantriebs 7 erfolgt bevorzugt über die Datenverarbeitungseinrichtung 16. Zur Förderung der Waffelröllchen 2 ist ein Förderspalt 9 vorgesehen. Der Förderspalt 9 wird einerseits von der Transportwalze 8 begrenzt. Auf der gegenüberliegenden Seite wird der Förderspalt 9 durch eine Gegenhalterfläche 10 begrenzt. In der vorliegenden Ausführungsform ist die Gegenhalterfläche 10 durch eine Rinne mit v-förmigem Profil gebildet. Diese Rinne kann als eigene Komponente oder als Teil der Rutsche 5 angesehen werden. Nun ist der Förderspalt 9 bevorzugt derart bemessen, dass das Waffelröllchen 2 zwischen der Transportwalze 8 und der Gegenhalterfläche 10 eingeklemmt und dadurch transportiert werden kann. Um eine Verformung des heißen, plastisch verformbaren Waffelröllchens 2 zu vermeiden, ist die Transportwalze 8 elastisch verformbar bzw. nachgiebig ausgebildet. Insbesondere ist die Transportwalze 8 in allen Ausführungsformen weicher ausgebildet als die Waffelröllchen 2 im Bereich der Transportwalze 8, sodass die Transportwalze 8 von dem Waffelröllchen 2 verformt wird, das Waffelröllchen 2 aber im Wesentlichen nicht verformt wird.

Es kann zwar durch die elastische Verformung der Transportwalze 8 auch zu einer Verformung der Waffelröllchen 2 kommen, das Material der Transportwalze 8 ist jedoch so gewählt, dass die Verformung der Waffelröllchen 2 als im Wesentlichen nicht vorhanden angesehen werden kann. Beispielsweise wird eine Durchmesserverringerung des Waffelröllchens 2 durch die Transportwalze 8 von weniger als 10 %, bevorzugt von weniger als 5 % als "nicht verformt" angesehen. Hierzu ist die Transportwalze 8 zumindest teilweise aus einem elastisch verformbaren Material gebildet. Die Transportwalze 8 weist eine Mantelfläche 11 auf. Zumindest diese Mantelfläche 11 sollte elastisch verformbar bzw. nachgiebig ausgebildet sein.

In der vorliegenden Ausführungsform ist die Transportwalze 8 radförmig ausgebildet und weist eine Nabe 18 sowie Speichen 12 auf. Die Speichen 12 erstrecken sich von der Nabe 18 zur Mantelfläche 11. Bevorzugt sind diese Speichen 12 elastisch verformbar bzw. nachgiebig ausgebildet. Tritt ein Waffelröllchen 2 in Kontakt mit der Transportwalze 8, so werden die Mantelfläche 11 und in der vorliegenden Ausführungsform auch die Speichen 12 verformt. Die Speichen 12 sind in der vorliegenden Ausführungsform schräg zur radialen Richtung angeordnet und insbesondere auch gekrümmt ausgestaltet. In allen Ausführungsformen ist bevorzugt zwischen den Speichen 12 ein Freiraum vorgesehen. Durch diese Form wird die Steifigkeit der Transportwalze 8 verringert. Durch einen derartigen Aufbau kann ein Material verwendet werden, das als massive Walze eine zu hohe Steifigkeit hätte. Jedoch kann durch den Aufbau mit elastisch verformbaren Speichen 12 eine ausreichende Nachgiebigkeit erzielt werden, obwohl ein verhältnismäßig festes und damit widerstandsfähiges Material verwendet wird. Hierdurch kann beispielsweise die Standfestigkeit der Transportwalze 8 verbessert werden. Bevorzugt ist das Material der Transportwalze 8 bzw. die Mantelfläche 11 flüssigkeitsdicht ausgebildet.

Die Übergabevorrichtung 1 ist derart ausgestaltet, dass ein über die Rutsche 5 Richtung Nachbearbeitungsmaschine 4 befördertes Waffelröllchen 2 durch die Transportwalze 8 eingezogen und mit einer wählbaren oder gewählten Geschwindigkeit Richtung oder in die Nachbearbeitungsmaschine 4 transportiert wird. Zusätzlich ist in der vorliegenden Ausführungsform ein Sensor 15 vorgesehen, der das Waffelröllchen 2 detektiert. Beispielsweise kann dieser Sensor 15 als Lichtschranke ausgebildet sein. Der Sensor 15 ist mit der Datenverarbeitungseinrichtung 16 verbunden. Detektiert der Sensor 15 ein Waffelröllchen 2, so wird ein Signal an die Datenverarbeitungseinrichtung 16 übermittelt. Dieses Signal gibt Aufschluss darüber, zu welcher Zeit ein Waffelröllchen 2 am Ort des Sensors 15 ist. In der Datenverarbeitungseinrichtung 16 ist bevorzugt auch ein Signal oder ein eingegebener Wert der Geschwindigkeit des Waffelröllchens 2 vorhanden, da diese Geschwindigkeit durch die Geschwindigkeit der Transportwalze 8 bzw. des Transportwalzenantriebs 7 bestimmt ist. Aus den Signalen oder Werten zu Geschwindigkeit und Ort/Zeit eines Waffelröllchens 2 kann eine Synchronisation der Steuerung der Nachbearbeitungsmaschine 4 erfolgen. So kann die Nachbearbeitungsmaschine 4 durch die Datenverarbeitungseinrichtung 16 zum richtigen Zeitpunkt in die Aufnahmestellung versetzt werden, um ein Waffelröllchen 2 aufzunehmen.

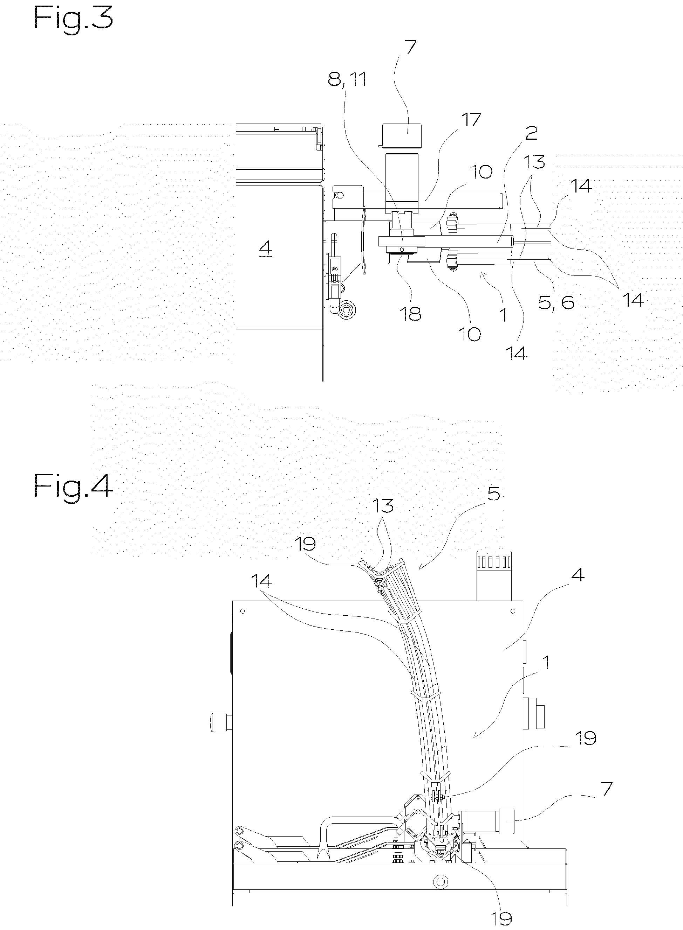

**Figur 3** zeigt eine Ansicht des Details aus Figur 2 von oben. In der dargestellten Stellung befindet sich ein Waffelröllchen 2 in Kontakt mit der Transportwalze 8 der Übergabevorrichtung 1. Das Waffelröllchen 2 wurde von der nicht dargestellten Herstellungsmaschine 3 über eine Rutsche 5 in den Endbereich 6 befördert. Die Transportwalze 8 ist über einen Transportwalzenantrieb 7 angetrieben. Die Rutsche 5 umfasst Führungsflächen 13 zur seitlichen Führung des Waffelröllchens 2 auf der Rutsche 5. Insbesondere sind die Rutsche 5 und bevorzugt auch die Führungsflächen 13 durch Führungsstangen 14 gebildet.

Bei Anordnungen, deren Übergabevorrichtung 1 als Rutsche 5 ausgebildet ist, kann ein Nachrüstsatz angebracht werden, um die erfindungsgemäße Übergabevorrichtung 1, die erfindungsgemäße Anordnung und das erfindungsgemäße Verfahren zu bilden. Der Nachrüstsatz umfasst bevorzugt eine Transportwalze 8, einen Transportwalzenantrieb 7, eine Befestigungsvorrichtung 17 und eine Steuerungsschnittstelle zur Verbindung des Transportwalzenantriebs 7 mit der Datenverarbeitungseinrichtung 16. Die Befestigungsvorrichtung 17 ist derart ausgestaltet, dass die Transportwalze 8 bzw. deren Transportwalzenantriebs 7 im Endbereich 6 der Rutsche 5 befestigt werden kann. Insbesondere sind der Nachrüstsatz und die Befestigungsvorrichtung 17 derart ausgestaltet, dass ein Förderspalt 9 gebildet werden kann, der eine im Wesentlichen verformungsfreie Förderung der heißen, plastisch verformbaren Waffelröllchen 2 ermöglicht. Gegebenenfalls kann auch der Sensor 15 ein Teil des Nachrüstsatzes sein. Wenn bei der bestehenden Übergabevorrichtung 1 ein geeigneter Sensor 15 bereits vorhanden ist, so kann auch der vorhandene Sensor 15 zur Synchronisierung verwendet werden.

**Figur 4** zeigt eine weitere Ansicht einer möglichen Ausgestaltung einer Übergabevorrichtung 1. Insbesondere im oberen Bereich ist das wannenförmige Profil der Rutsche 5 ersichtlich. Zur Führung der Waffelröllchen 2 sind seitliche Führungsflächen 13 vorgesehen. Diese werden in der vorliegenden Ausführungsform durch Führungsstangen 14 gebildet.

Zur Beeinflussung der Rutschgeschwindigkeit der Waffelröllchen 2 auf der Rutsche 5 kann die Rutsche 5 eine Stelleinrichtung 19 umfassen. In der vorliegenden Ausführungsform ist die Stelleinrichtung 19 durch eine Verstellbarkeit der Lage der Führungsflächen 13 bzw. Führungsstangen 14 ausgebildet. Durch die Vergrößerung oder Verkleinerung der Abstände der Führungsflächen 13 oder der Führungsstangen 14 ändern sich die Reibverhältnisse an den Waffelröllchen 2 und damit auch die Geschwindigkeit. Trotz dieser Einstellmöglichkeiten tritt in der Praxis der Effekt auf, dass die Geschwindigkeiten der einzelnen Waffelröllchen 2 variieren. Um dennoch eine ausreichende Synchronisation mit der Nachbearbeitungsmaschine 4 zu gewährleisten, ist erfindungsgemäß die Transportwalze 8 vorgesehen.

## Patentansprüche

1. **Übergabevorrichtung** (1) zur Übergabe von gebackenen Waffelröllchen (2) von einer Herstellungsmaschine (3) an eine Nachbearbeitungsmaschine (4) zur Nachbearbeitung der Waffelröllchen (2) im heißen, plastisch verformbaren Zustand, wobei die Übergabevorrichtung (1) eine Rutsche (5) zum Transport der heißen, plastisch verformbaren Waffelröllchen (2) von der Herstellungsmaschine (3) Richtung Nachbearbeitungsmaschine (4) aufweist,
**dadurch gekennzeichnet,**
**dass** im Endbereich (6) der Rutsche (5) oder zwischen Rutsche (5) und Nachbearbeitungsmaschine (4) eine über einen Transportwalzenantrieb (7) drehbar angetriebene Transportwalze (8) zum Transport der heißen, plastisch verformbaren Waffelröllchen (2) mit einer einstellbaren oder eingestellten Geschwindigkeit angeordnet ist.

2. Übergabevorrichtung nach Anspruch 1, **dadurch gekennzeichnet,**
- **dass** ein Förderspalt (9) zur Förderung der Waffelröllchen (2) vorgesehen ist,
- **dass** die Transportwalze (8) den Förderspalt (9) auf einer Seite begrenzt oder bildet,
- **dass** eine Gegenhalterfläche (10) vorgesehen ist, die den Förderspalt (9) auf der gegenüberliegenden Seite begrenzt oder bildet, wobei die Gegenhalterfläche (10) insbesondere durch einen Abschnitt der Rutsche (5) gebildet ist,
- und **dass** der Förderspalt (9) derart bemessen ist, dass ein von der Rutsche (5) kommendes Waffelröllchen (2) zwischen Transportwalze (8) und Gegenhalterfläche (10) eingezogen und weitertransportiert wird.

3. Übergabevorrichtung nach Anspruch 1 oder 2, **dadurch gekennzeichnet,**
- **dass** die Transportwalze (8) zum Transport der heißen, plastisch verformbaren Waffelröllchen (2) elastisch verformbar und insbesondere nachgiebig ausgebildet ist,
- und/oder dass die Transportwalze (8) derart ausgestaltet ist, dass sie beim Transport der Waffelröllchen (2) elastisch verformt wird, aber die heißen, plastisch verformbaren Waffelröllchen (2) im Wesentlichen nicht verformt.

4. Übergabevorrichtung nach einem der Ansprüche 1 bis 3, **dadurch gekennzeichnet, dass** die Mantelfläche (11) der Transportwalze (8) aus einem elastisch verformbaren und flüssigkeitsdichten Material, insbesondere aus einem Elastomer, bevorzugt aus Polyurethan, gebildet ist.

5. Übergabevorrichtung nach einem der Ansprüche 1 bis 4, **dadurch gekennzeichnet,**
- **dass** die Transportwalze (8) radförmig ausgebildet ist und Speichen (12) aufweist, die sich von einer Nabe (18) der Transportwalze (8) Richtung Mantelfläche (11) der Transportwalze (8) erstrecken,
- wobei die Speichen (12) derart ausgebildet sind, dass sie sich beim Transport der heißen, plastisch verformbaren Waffelröllchen (2) elastisch verformen,
- und/oder wobei der Verlauf der Speichen (12) von der radialen Richtung abweicht,
- und/oder wobei die Speichen (12) schräg zur radialen Richtung und gekrümmt verlaufen,
- oder dass die Transportwalze (8) als Rundbürste ausgebildet ist.

6. Übergabevorrichtung nach einem der Ansprüche 1 bis 5, **dadurch gekennzeichnet, dass** die Rutsche (5) beidseitig verlaufende Führungsflächen (13) zur seitlichen Führung der Waffelröllchen (2) aufweist, wobei die Führungsflächen (13) insbesondere durch langegestreckte Führungsstangen (14) gebildet sind.

7. Übergabevorrichtung nach einem der Ansprüche 1 bis 6, **dadurch gekennzeichnet, dass** die Rutsche (5) eine Stelleinrichtung (19) zur Beeinflussung der Rutschgeschwindigkeit der Waffelröllchen (2) aufweist, wobei die Stelleinrichtung (19) insbesondere eine Stelleinrichtung zur Veränderung und Wahl des seitlichen Abstandes der Führungsflächen (13) ist.

8. Übergabevorrichtung nach einem der Ansprüche 1 bis 7, **dadurch gekennzeichnet, dass** im Bereich der Förderwalze (8), insbesondere nach der Förderwalze (8), ein Sensor (15) zur Detektion jeweils eines Waffelröllchens (2) vorgesehen ist.

9. **Anordnung** zur Herstellung von gebackenen, knusprig-spröden gerollten Waffelprodukten aus einem zuckerhältigen und/oder zuckerersatzhältigen Waffelteig, umfassend:
- eine Herstellungsmaschine (3) zur Herstellung von heißen, plastisch verformbaren Waffelröllchen (2),
- eine Nachbearbeitungsmaschine (4) zur Nachbearbeitung der Waffelröllchen (2) im heißen, plastisch verformbaren Zustand und gegebenenfalls zur Abkühlung und Verfestigung der verformten Waffelröllchen (2),
- eine Übergabevorrichtung (1) zur Übergabe der Waffelröllchen (2) von der Herstellungsmaschine (3) an die Nachbearbeitungsmaschine (4) im heißen, plastisch verformbaren Zustand,
- und eine Datenverarbeitungseinrichtung (16) zur Verarbeitung von elektrischen Signalen und zur Steuerung von Komponenten der Anordnung,
**dadurch gekennzeichnet, dass** die Übergabevorrichtung (1) nach einem der Ansprüche 1 bis 8 ausgebildet ist.

10. Anordnung nach Anspruch 9, **dadurch gekennzeichnet,**
- **dass** die Nachbearbeitungsmaschine (4) wahlweise eine Aufnahmestellung oder eine Verarbeitungsstellung aufweist, wobei in der Aufnahmestellung ein Waffelröllchen (2) in die Nachbearbeitungsmaschine (4) eingebracht werden kann, und wobei in der Verarbeitungsstellung die Aufnahme eines weiteren Waffelröllchens (2) gesperrt ist,
- und **dass** die Übergabevorrichtung (1) und insbesondere deren Transportwalzenantrieb (7) über die Datenverarbeitungseinrichtung (16) derart mit der Nachbearbeitungsmaschine (4) synchronisiert ist, dass die Waffelröllchen (2) nur dann in die Nachbearbeitungsmaschine (4) eingebracht werden, wenn sie sich in der Aufnahmestellung befindet.

11. Anordnung nach Anspruch 9 oder 10, **dadurch gekennzeichnet,**
- **dass** die Herstellungsmaschine (3) als Ringbackmaschine zur Herstellung von essbaren Waffelröllchen (2) ausgebildet ist,
- **dass** die Ringbackmaschine zum Herstellen der Waffelröllchen (2) mit einer kontinuierlich umlaufenden, beheizten Backfläche zum Backen von einem endlosen, im heißen Zustand plastisch verformbaren, Waffelband aus flüssigem, zuckerhältigem und/oder zuckerersatzhältigem Waffelteig ausgestattet ist,
- und **dass** die Ringbackmaschine eine Verarbeitungsstation umfasst, in der für das gebackene Waffelband eine der Backfläche benachbarte Abnahmevorrichtung, eine dieser Abnahmevorrichtung nachgeordnete Wickelvorrichtung zum Erzeugen eines endlosen hülsenförmigen Hohlkörpers und eine der Wickelvorrichtung nachgeordnete Schneidvorrichtung zum Ablängen des hülsenförmigen Hohlkörpers in einzelne Waffelröllchen (2) vorgesehen ist.

12. **Verfahren** zur Herstellung von gebackenen, knusprig-spröden, gerollten Waffelprodukten aus einem zuckerhältigen und/oder zuckerersatzhältigen Waffelteig, umfassend folgende Schritte:
- Herstellen von heißen, plastisch verformbaren Waffelröllchen (2) in einer Herstellungsmaschine (3),
- Übergeben der heißen, plastisch verformbaren Waffelröllchen (2) an eine Nachbearbeitungsmaschine (4), in der die Waffelröllchen (2) im heißen, plastisch verformbaren Zustand verformt, gegebenenfalls zerteilt und gegebenenfalls abgekühlt und damit verfestigt werden,
- wobei die Waffelröllchen (2) zur Übergabe auf einer Rutsche (5) einer Übergabevorrichtung (1) von der Herstellungsmaschine (3) Richtung Nachbearbeitungsmaschine (4) rutschen,
**dadurch gekennzeichnet,**
**dass** die Waffelröllchen (2) im Endbereich (6) der Rutsche (5) oder zwischen Rutsche (5) und Nachbearbeitungsmaschine (4) durch eine drehbar angetriebene Transportwalze (8) mit einer einstellbaren oder eingestellten Geschwindigkeit in die Nachbearbeitungsmaschine (4) befördert werden.

13. Verfahren nach Anspruch 12, **dadurch gekennzeichnet, dass** sich die Transportwalze (8) beim Kontakt mit dem Waffelröllchen (2) elastisch verformt und nachgibt, womit das heiße, plastisch verformbare Waffelröllchen (2) von der Transportwalze (8) Richtung Nachbearbeitungsmaschine (4) befördert wird, ohne dass es durch die Transportwalze (8) verformt wird.

14. Verfahren nach Anspruch 12 oder 13, **dadurch gekennzeichnet,**
- **dass** die mit einer einstellbaren oder eingestellten Geschwindigkeit Richtung Nachbearbeitungsmaschine (4) beförderten Waffelröllchen (2) jeweils über einen Sensor (15), insbesondere über eine Lichtschranke, detektiert werden,
- und **dass** ein Sensorsignal zusammen mit einem Geschwindigkeitssignal oder Geschwindigkeitswert in der Datenverarbeitungseinrichtung (16) verarbeitet wird, um die Nachbearbeitungsmaschine (4) in die Aufnahmestellung zu bringen, bevor oder während das Waffelröllchen (2) in die Nachbearbeitungsmaschine (4) befördert wird.

15. **Nachrüstsatz** zur Bildung einer Übergabevorrichtung (1) nach einem der Ansprüche 1 bis 8 und/oder zur Bildung einer Anordnung nach einem der Ansprüche 9 bis 11, umfassend:
- eine Transportwalze (8),
- einen Transportwalzenantrieb (7) zum Antrieb der Transportwalze (8),
- und eine Befestigungsvorrichtung (17) zur Befestigung der Transportwalze (8) und des Transportwalzenantriebs (7) im Endbereich (6) der Rutsche (5) der Übergabevorrichtung (1) oder zwischen der Rutsche (5) und der Nachbearbeitungsmaschine (4).
